(19) Europäisches Patentamt

European Patent Office

Office européen des brevets

(11) Veröffentlichungsnummer: **0 296 278 B1**

(12) **EUROPÄISCHE PATENTSCHRIFT**

(45) Veröffentlichungstag der Patentschrift: **13.05.92**

(51) Int. Cl.⁵: **B01D 46/06**, E21F 5/20

(21) Anmeldenummer: **87115064.5**

(22) Anmeldetag: **15.10.87**

Die Akte enthält technische Angaben, die nach dem Eingang der Anmeldung eingereicht wurden und die nicht in dieser Patentschrift enthalten sind.

(54) **Bergbaustaubfilter.**

(30) Priorität: **23.06.87 IT 2100887**

(43) Veröffentlichungstag der Anmeldung:
**28.12.88 Patentblatt 88/52**

(45) Bekanntmachung des Hinweises auf die Patenterteilung:
**13.05.92 Patentblatt 92/20**

(84) Benannte Vertragsstaaten:
**DE ES FR GB IT**

(56) Entgegenhaltungen:
**DE-A- 2 703 260**
**DE-A- 3 536 434**
**FR-A- 2 526 670**

**GLÜCKAUF, Band 117, Nr. 12, 25. Juni 1981, Seiten 713-718, Bochum, DE; H. BECKER: "Neue Entwicklungen in der Entstaubungstechnik"**

(73) Patentinhaber: **Hölter, Heinz, Dipl.-Ing.**
**Beisenstrasse 39-41**
**W-4390 Gladbeck(DE)**

(72) Erfinder: **Igelbüscher, Heinrich, Dipl.-Ing.**
**Frielinghausstrasse 37a**
**W-4390 Gladbeck(DE)**
Erfinder: **Hölter, Heinz, Dipl.-Ing.**
**Beisenstrasse 39-41**
**W-4390 Gladbeck(DE)**

(74) Vertreter: **Schulte, Jörg, Dipl.-Ing.**
**Hauptstrasse 2**
**W-4300 Essen-Kettwig(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Staubfilter für den Einsatz im untertägigen Berg- und Tunnelbau, insbesondere zum Reinigen der staubhaltigen Wetter hinter Gewinnungsmaschinen oder in den Strecken eingesetzter Teil- oder Vollschnittmaschinen, mit einem Gehäuse mit in einer Ebene verlaufendem Rein- und Rohgaskanal , die über einen auf der Vorderseite des Gehäuses ausgebildeten Kanal bzw. über in seinem Boden ausgebildete Lochungen mit den im Gehäuseinneren angeordneten Filtertaschen verbunden sind, wobei für die über Führungen in das Gehäuse einschiebbaren Filtertaschen eine diskontinuierlich arbeitende Reinigungseinrichtung und wahlweise zu betätigende, beidseitige Inspektionsöffnungen vorgesehen sind.

Im untertägigen Berg- und Tunnelbau werden vielfach Trockenfilter zur Absaugung an Gewinnungsmaschinen oder Teil- bzw. Vollschnittmaschinen eingesetzt, die über Luftleitungen mit der Gewinnungsmaschine in Verbindung bleiben und jeweils in größeren Abständen der Maschine folgend umgesetzt werden müssen (Glückauf, Vol. 117, 1981, Nr. 12, Seiten 713-718). Der für das Umsetzen notwendige Aufwand ist teilweise erheblich, insbesondere, wenn man die beengten Verhältnisse unter Tage berücksichtigt. Probleme treten weiter auf, weil die relative Luftfeuchte unter Tage durch die Verwendung von Wasserbedüsung an den unterschiedlichsten Stellen teilweise erheblich ist. Begünstigt wird dies durch die hohen Temperaturen, so daß es schwierig ist, Trockenfilter über ausreichend lange Zeitabstände betriebsbereit zu halten. Nachteilig ist schließlich, daß zum Aus- und wieder Zusammenbauen der einzelnen Filter die Filtergehäuse schlecht begehbar sind, was auch dann von Nachteil ist, wenn Inspektionen notwendig werden. Generell kleinbauende Staubfilter sind aus der DE-A-2 703 260 bekannt. Die Filtertaschen können aus dem Gehäuse herausgezogen bzw. durch Druckstoßeinrichtungen gesäubert werden können. Die Leistung ist nicht erweiterbar, weil die diagonale Trennwand zwischen Roh- und Reingaskanal das Koppeln zweier Staubfilter ausschließt. Problematisch ist, daß der in den Staubfiltern niedergeschlagene Staub schlecht zu entfernen ist, weil er aufgrund seiner Feinkörnigkeit und des unter Tage überall vorhandenen Wetterzuges beim Austragen und Transportieren leicht wieder von den Wetter aufgenommen wird. Durch das Gitter, das das Filtertuch zusammen mit den Distanzschuhen bei der FR-A-2 526 670 abstützt, ist ein Abklopfen des Staubes möglich . Allerdings ist eine Lösung zur einwandfreien Führung der Wetter nicht gegeben, so daß ein dauerhaftes Niederschlagen des Staubes, auch des abgeklopften, nicht gesichert ist.

Der Erfindung liegt die Aufgabe zugrunde, einen kleinbauenden, auch bei hoher Luftfeuchte betriebsbereiten Staubfilter zu schaffen, der einfach unterschiedlichen Belastungen angepaßt werden kann.

Die Aufgabe wird erfindungsgemäß dadurch gelöst, daß das eine transportable Einheit darstellende Modulteil mit Gehäuse mit weiteren, ebenfalls Gehäuse aufweisenden Modulteilen mittels beidseitig der Roh- und Reingaskanäle vorgesehenen kuppelfähigen Kopfstücken zu einer Kompletteinheit koppelbar ausgebildet ist, daß die Querschnitte der jedem Gehäuse zugeordneten Rein- und Rohgaskanäle durch Verschieben des Reingaskanalbodens zusammen mit der Trennwand quer zur Wetterfließrichtung veränderbar sind, daß der Einsteckrahmen der Filtertaschen zur Abdichtung gegen die Gehäuseinnenwand mit einem abdichtenden Material beschichtet ist und daß die Filtertaschen, als Stützkonstruktion für das darüber gespannte Filtertuch, ein Gitter aus sich gegenseitig stützenden Längs- und Querdrähten oder zwei sich gegenüberliegende Gitter dieser Art mit gegeneinander gerichteten Distanz Schuhen aufweisen.

Mit einem derartigen Staubfilter ist es möglich, durch Zusammenfügen mehrerer derartiger Gehäuse praktisch eine beliebige Leistung vorzugeben. So können kleinbauende Filter von 200 bis 600 oder mehr m$^3$ pro Minute zur Verfügung gestellt werden. Dazu ist es lediglich notwendig, die jeweils eine komplette Einheit darstellenden Gehäuse im Bereich der Roh-/Reingaskanäle bzw. der entsprechenden Kopfstücke miteinander zu verbinden und den Querschnitt von Rein- und Rohgaskanal durch Verschieben der Trennwand den neuen Verhältnissen anzupassen. Dann ist automatisch erreicht, daß die staubhaltigen Wetter, d.h. die Rohgase von der einen Seite eintreten, durch die Filtertaschen geleitet werden und auf der anderen Seite als Reingas wieder austreten. Durch die besondere Ausbildung der einzelnen Filtertaschen, die als solche in das Gehäuse eingeschoben und entsprechend auch wieder aus ihm herausgenommen werden können mit den mit Filtertaschenmaterial bespannten Gittern und ggf. Distanzschuhen ist sichergestellt, daß jeweils die aufgespannten Filtertücher auch dann betriebsbereit und wirksam bleiben, wenn aufgrund der relativen Feuchte dem Filter Material (Staub) zugeführt wird, das zum Anbacken und Festsetzen neigt. Auch bei entsprechendem Unterdruck können weder die Gitter noch die darauf gespannten Tücher miteinander in Berührung kommen und zusammenkleben, so daß eine dauernde Betriebsbereitschaft gesichert ist. Die Filtertaschen werden dann durch Klopfen oder weiter hinten noch erläuterte Reinigungseinrichtungen beansprucht, so daß der Staub nach unten auf den Boden des Gehäuses fällt und von hier entnommen werden kann. Das Volumen des Rohgaskanals ist beim Rohgaseintritt annähernd 100 % und geht dann von Gehäuse zu Gehäuse auf annähernd 0 % zurück, wobei dies dadurch erreicht wird, daß der Querschnitt von Roh- und damit Reingaskanal entsprechend durch Verschieben der Trennplatte mit Boden zwischen beiden verändert wird. Dabei muß insbesondere darauf geachtet werden, daß der Reingaskanal mit einem Boden versehen ist, um die im Bereich des Rohgaskanals vorhandenen Lochungen abzudecken. Diese Verschiebbarkeit bzw. die Möglichkeit, das Volumen bzw. den Querschnitt der Kanäle zu verändern hat den Vorteil, daß völlig identische Gehäuse (Modulteile) über Tage vorgerüstet und dann unter Tage eingesetzt werden können. Unter Tage wird dann beim Zusammenbauen der jeweils richtige bzw. optimale Querschnitt bzw. das Volumen eingestellt. Entsprechend nimmt der Querschnitt des Reingaskanals in Wetterfließrichtung von Gehäuse zu Gehäuse zu und der Querschnitt des Rohgaskanals entsprechend ab. Eine umweltfreundliche Entsorgung von Staub wird in den Unteransprüchen noch erläutert.

Einer zweckmäßigen Weiterbildung der Erfindung nach ist vorgesehen, daß die Filtertaschen zu mehreren hochkantstehend jeweils einem entsprechend der Abmaße von Förderwagen und/oder Förderkörben ausgebildeten Gehäuse zugeordnet sind. Damit ist eine vorteilhaft transportable Einheit geschaffen, die als solche komplett vorgerüstet von über Tage nach unter Tage und zwar bis zum Einsatzort gebracht werden kann. Durch entsprechende Anschlagösen kann dann die einzelne Filtereinheit, d.h. das Gehäuse als solches an der Einschienenhängebahn transportiert oder auch als zusammengebaute Modulreihe an der Einschienenhängebahnschiene aufgehängt und verfahren werden.

Eine zweckmäßige Weiterbildung der Erfindung sieht vor, daß im Gehäuse unterhalb der Filtertaschen ein in Längsrichtung der aneinandergereihten Gehäuse verlaufender Kratzförderer angeordnet ist. Dieser Kratzförderer, der ebenfalls beispielsweise bis auf die Kette als Bauteil am Gehäuse zugeordnet ist, dient nach der Fertigmontage, d.h. nach Versehen mit einer Transportkette und Mitnehmern zum Abtransport des gesammelten Staubes. Da der flugfähige Staub bei diesem Transport innerhalb des geschlossenen Gehäuses bleibt, kann er nicht umweltschädlich wirken, sondern kann vielmehr, wie weiter hinten noch erläutert wird, transportfreundlich verarbeitet werden.

Um die einzelnen Gehäuse bzw. die ihnen zugeordneten Filtertaschen einfach und vollständig vom anhaftenden Staub zu befreien, sind erfindungsgemäß die Vorderkante der Rahmen der Filtertaschen oder die Inspektionsöffnungen als Vorderwand des Kanals mit an die Druckluftversorgung anschließbaren Druckschockdüsen bestückt. Durch Anschließen dieser Druckschockdüsen an die Luftversorgung werden die auf den Gittern aufliegenden Filtertücher bzw. wird das Filtertaschenmaterial aufgebläht, so daß selbst feuchter Staub abplatzt und nach unten auf den Boden des Gehäuses fällt, wo er vom Kratzförderer aufgenommen und im Takt weitertransportiert wird.

Dieses Weitertransportieren des Staubes und das umweltfreundliche Entfernen wird mit Hilfe der Erfindung dadurch erreicht, daß der Kratzförderer am Boden des Gehäuses endseitig einen Staubaustrag aufweist, der über eine Strahldüsemit einer Wasserluftdüse versehenen Strahlinjektor verbunden ist. Der trockene, zumindest aber noch flugfähige Staub wird bei dieser Behandlung in den hintereinandergeschalteten Aggregaten so mit Wasser befeuchtet und entsprechend gemischt, daß er anschließend optimal dem übrigen Fördergut zugegeben oder gesondert abtransportiert werden kann. Um den Mischeffekt zu optimieren, insbesondere bei feinkörnigem und wasserabstoßenden Material ist dann noch vorgesehen, daß der Strahlinjektor mit einer Mischstrecke mit Austragszyklonen verbunden ist. Hierüber wird das Material ausgetragen und dem Förderband übergeben, über das es entweder dem anderen Fördergut zugeführt oder alleine abtransportiert werden kann.

Ein besonders stabiles, das zusätzlich optimal gespannt werden kann, ist gegeben, wenn der Rahmen als geschlitzter Rohrrahmen ausgebildet ist, in dem die Längs- und Querdrähte des Gitters sich gegenseitig abstützend verankert bzw. befestigt sind. Aufgrund der Stabilität der so geschaffenen Stützkonstruktion ist es möglich auf die Distanzschuhe zu verzichten. Der entsprechend ausgebildete Rahmen bzw. Rohrrahmen gibt dem Gitter die notwendige Seitenstabilität, während der mittige Bereich durch die gegenseitige Abstützung der Längs-und Querdrähte aneinander dem Filtertuch eine größtmögliche Auflage gibt, wobei sehr günstige Öffnungsverhältnisse zwischen Filtertuch und Gitter erreicht ist. Der nicht zu vermeidende Druckverlust wird auf diese Art und Weise sehr geringgehalten. Er liegt um ca. 15 % geringer als bei bekannten entsprechend mit Lochblechen ausgerüsteten Filtertaschen.

Das gegenseitige Abstützen der Längs- und Querdrähte ist besonders günstig zu erreichen, wenn die Längs- und Querdrähte gegenseitig verkröpft zueinander angeordnet sind. Durch die so gezielt vorgesehenen Umbiegungen der Längs- bzw. Querdrähte wird erreicht, daß die jeweilige Achsmittellinie des gebogenen Teils entweder parallel oder in der gleichen Richtung verläuft wie die ursprüngliche Achsmittellinie. Eine weitere Optimierung ist zu erreichen, wenn die Längs- und Querdrähte längs- und/oder querversetzt gegeneinander verkröpft zueinander angeordnet sind, was allerdings bei der Herstellung einen Mehraufwand erfordert, darüber hinaus aber den Vorteil bietet, daß die einzelnen Kröpfungen jeweils wechselseitig auf beiden Seiten des Gitters liegen, so daß eine punktweise Abstützung des Filtertuches gezielt über die gesamte Fläche verteilt erreicht wird.

Eine insgesamt stabile und sicher zu reinigende Filtertasche wird gemäß einer zweckmäßigen Ausbildung dadurch vorgegeben, daß der als Schlitzrohr ausgebildete Rahmen U-förmig gebogen und mit den Enden in dem Einsteckrahmen festgelegt ist, der mittig einen Schlitz zum Austritt der Wetter aus dem Filtertascheninneren in den Kanal aufweist. Der entsprechend ausgebildete Rahmen bzw. Rohrrahmen gibt dem Gitter die notwendige Stabilität, während der mittige Bereich durch die gegenseitige Abstützung der Längs- und Querdrähte aneinander stabil ist. Durch diese Ausbildung kann auf einfache und zweckmäßige Weise eine gezielte Vorspannung für das Gitter erreicht werden, das zwischen den parallel verlaufenden Rahmenteilen angeordnet ist, die aber in der Vorderkante bzw. im Einsteckrahmen so angeordnet werden können, daß sie die jeweiligen Quer- und auch die Längsdrähte spannen, wodurch sich eine vorteilhaft plane Fläche des Gitters ergibt, die auch über lange Standzeiten eingehalten werden kann.

Die Rahmen der einzelnen Filtertaschen stützen sich durch eine besondere Ausbildung der einzelnen Führungen für den Rahmen am Gehäuse ab. Die Filtertücher können sich in diesem Bereich nicht berühren. Eine Verringerung des Druckverlustes ist so zusätzlich zu erreichen.

Die Erfindung zeichnet sich insbesondere dadurch aus, daß ein bergbaugerechter, transportfreundlicher Staubfilter geschaffen ist, der den untertägigen Einsatzbedingungen angepaßt und vielseitig verwendbar ist. Besonders vorteilhaft ist, daß ein derartig ausgebildeter und aufgebauter Staubfilter mit unterschiedlicher Leistung beispielsweise zwischen 200 und 600 oder auch mehr $m^3$ pro Minute betrieben werden kann. Es ist dazu lediglich notwendig, entsprechend viele Gehäuse mit integrierten Filtertaschen zu kombinieren. Die besondere Ausbildung einerseits des Rahmens und andererseits des Gitters gewährleistet vorteilhaft niedrige Druckverluste der gesamten Einrichtung bei gleichzeitig vorteilhaft stabiler Ausbildung des Gitters und damit vorteilhafte Abstützung der beiden Filtertücher jeder einzelnen Filtertasche.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:

Fig. 1    einen aus mehreren Gehäusen zusammengesetzten Staubfilter,

Fig. 2    einen Schnitt durch ein Gehäuse,

Fig. 3    eine Draufsicht auf eine Filtertasche,

Fig. 4    einen Staubfilter mit Staubverarbeitung,

Fig. 5    eine mit einem stabilisierten Gitter ausgerüstete Filtertasche in Seitenansicht

Fig. 6    die aus Fig. 5 ersichtliche Filtertasche in Vorkopfansicht,

Fig. 7    einen Ausschnitt aus dem Gitter,

Fig. 8    eine weitere vergrößerte Ausbildung des Gitters nach Fig. 7 und

Fig. 9    eine mit wechselweise vorgesehenen Kröpfungen ausgerüstete Ausbildung des Gitters.

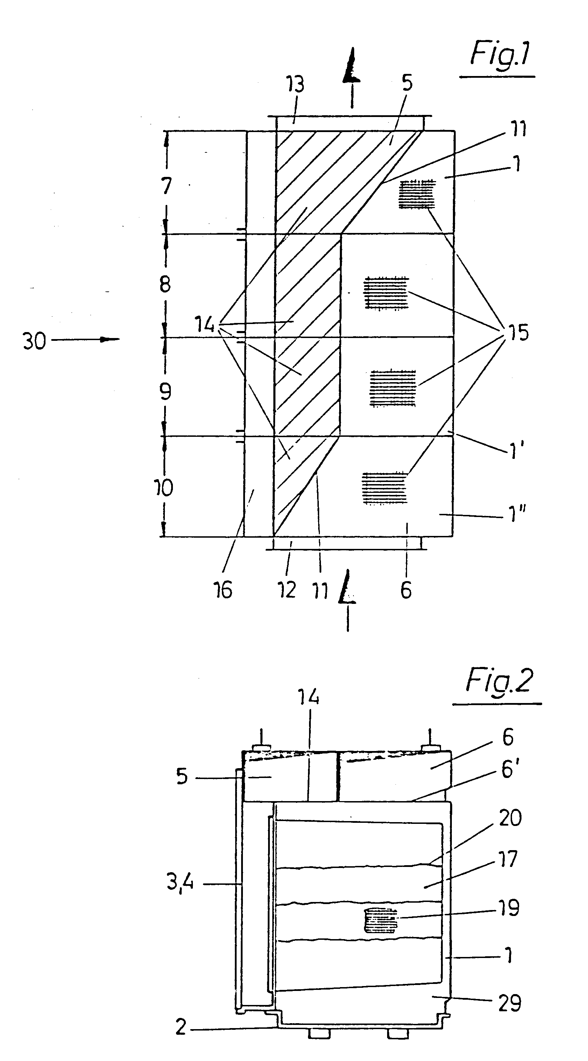

Fig. 1 zeigt die einzelnen erfindungsgemäßen, aneinanderreihbaren Modulteile bzw. Teilstücke (7, 8, 9, 10), die alle den gemeinsamen Aufbau, d.h. das gleiche Gehäuse (1, 1', 1'') haben.

Im Gehäuse, d.h. auf dem Boden ist ein Kratzförderer (2) angeordnet, der den niedergeschlagenen und dann von den Filtertaschen getrennten Staub aufnimmt und abtransportiert. Mit (3 bzw. 4) sind die Inspektionstüren bezeichnet, die jeweils die Möglichkeit geben, links oder rechts dar Gehäuse zu inspizieren, je nachdem, wie das Gehäuse in der Strecke angeordnet wird.

Auf dem Gehäuse (1) verläuft sowohl der Reingaskanal (5) wie der Rohgaskanal (6), wobei beide von Teilstück zu Teilstück, d.h. von (7 zu 8 zu 9 zu 10) im Querschnitt zunehmen bzw. abnehmen. Die schraffierten Flächen stellen ein Bodenblech (14) dar, womit angedeutet wird, daß es sich hier um den Reingaskanal (5) handelt, während beim Rohgaskanal (6) ein Boden in dem Sinne nicht vorhanden ist bzw. ein solcher mit entsprechenden Lochungen (15), so daß das herangeführte und mit Staub beladene Rohgas durch diese Lochungen (15) hindurch in das Innere des Gehäuses eintreten kann, um von hieraus die Filtertaschen (17) zu bestreichen und in das Filtertascheninnere (17'''') einzudringen. Nach dem Abladen des Staubes an den mit dem Filtertuch (20), das über das Gitter (19) abgestützt ist, werden die gereinigten Wetter bzw. das Reingas dann über den Kanal (16) an der Vorderkante der Gehäuse (1) dem oben aufliegenden Reingaskanal (5) zugeführt und von diesem aus dem Gehäuse (1) bzw. aus dem Staubfilter (30) ausgetragen.

Zur Verbindung der einzelnen, den Gehäusen (1, 1', 1'') zugeordneten Reingas- und Rohgaskanäle (5, 6), weisen diese entsprechende Kopfstücke (12, 13) auf, die ein Verbinden der Kanalstücke (11) miteinander ermöglichen.

Die Reingas- und Rohgaskanäle (5,6 ) sind jeweils durch Verschieben der Trennwand mit dem Reingaskanalboden (14) im Querschnitt veränderbar. Die Trennwand wird quer zur Wetterfließrichtung verschoben, um so deren Querschnitt wie aus Fig. 1 ersichtlich jeweils den Bedingungen bzw. dem Wetterverlauf anzupassen.

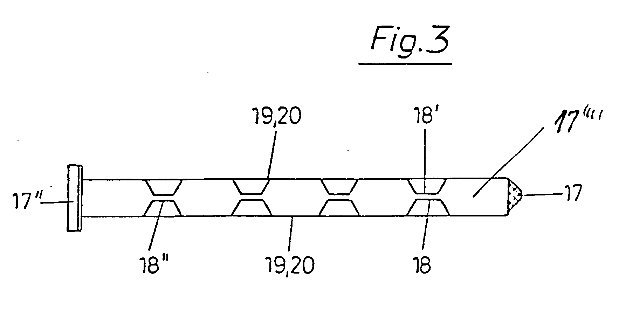

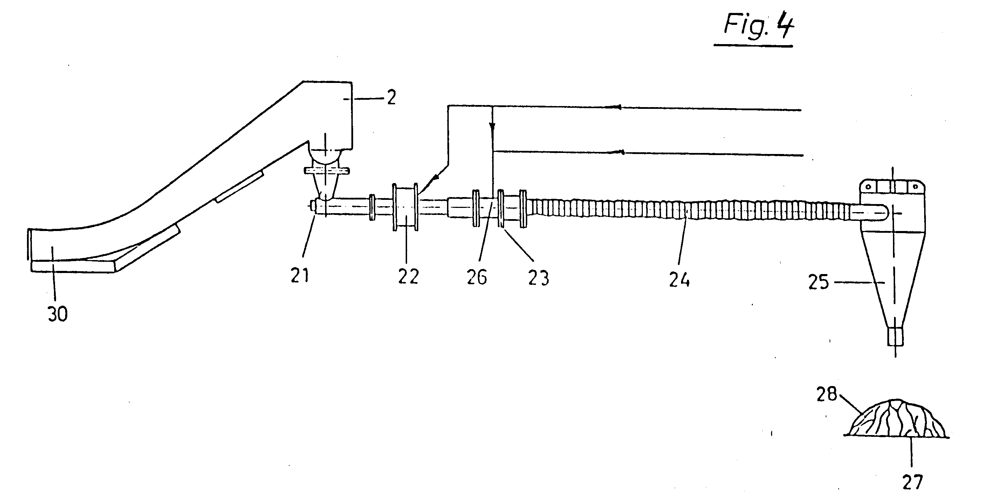

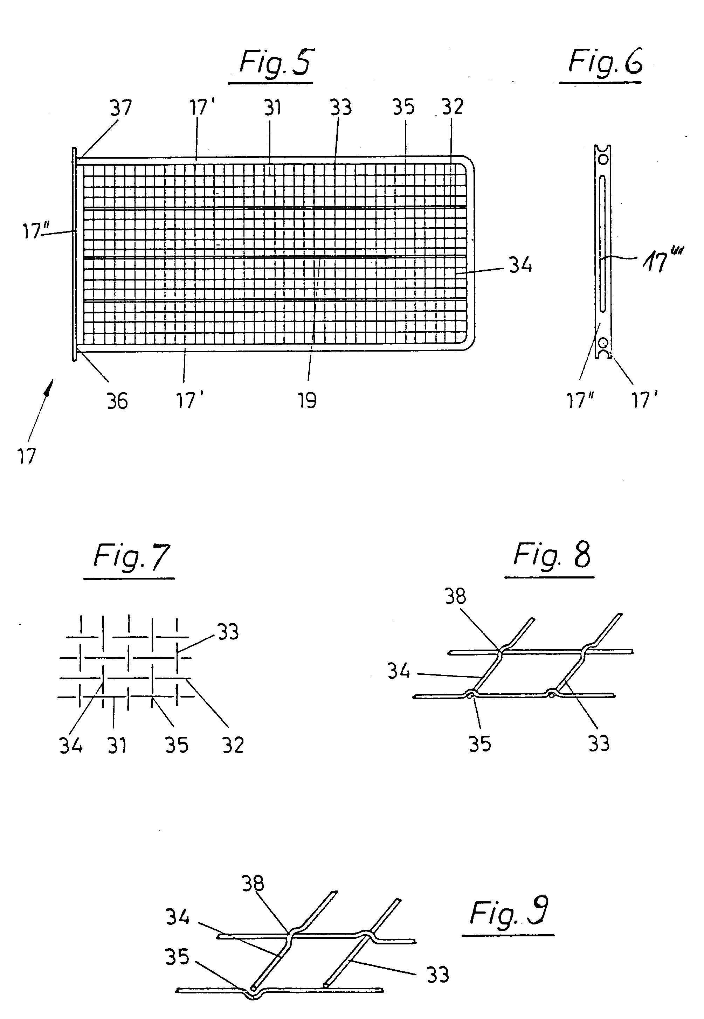

Fig. 2 zeigt einen Schnitt durch ein Gehäuse (1), wobei deutlich wird, daß beim Reingaskanal (5) ein geschlossenes Bodenblech (14) vorhanden ist, während der Boden (6') mit entsprechenden Lochungen (15) versehen ist, so daß das Gas aus dem Rohgaskanal (6) in das Gehäuseinnere (29) eintreten kann, um von hier durch das Filtertuch (20), was insbesondere aus Fig. 3 deutlich wird, in das Innere (17'''') der Filtertasche (17) einzutreten und von dort über den Schlitz (17''') in der Vorderkante (17'') in den Kanal (16) zu gelangen. Der Rahmen (17') ist mit einem abdichtenden Material beschichtet, um so wirksam gegen die Gehäuseinnenwand abzudichten, so daß das Gas bzw. die Wetter wirklich nur durch das Filtertuch (20) hindurch muß, und nicht daran vorbei etwa zur nächsten Filtertasche strömen kann. Der Abstand zwischen den Filterflächen des auf das Gitter (19) gespannten Filtertuches (20) wird jeweils durch die verteilt angeordneten Distanzschuhe (18, 18', 18'') gewährleistet, wobei diese insbesondere dem oberen und unteren Bereich zugeordnet sind.

Das im Staubfilter (30) niedergeschlagene Material, d.h. der feinkörnige Staub, wird über den Kratzförderer (2) einem Staubaustrag (21) zugeführt und dann einer Strahldüse (22) übergeben, von der Staub mit entsprechender Geschwindigkeit im Strahlinjektor (23) mit Luftwasserdüse (26) so genässt wird, daß er anschließend einwandfrei abtransportiert werden kann, insbesondere dann, wenn er anschließend noch eine Mischstrecke (24) und den Austragszyklonen (25) durchlaufen hat. Das Material wird dann in der Regel auf das Förderband (27) mit dem üblichen Fördergut (28) aufgegeben und abtransportiert.

Fig. 5 zeigt eine besondere Ausbildung einer Filtertasche (17) insofern, als hier ein stabiles und nur einen ausgesprochen geringen Druckverlust erzeugendes Gitter (19) vorgesehen ist. Dieses Gitter (19) besteht aus sich kreuzenden Längsdrähten (31, 32) und Querdrähten (33, 34). Diese Längs- und Querdrähte (31, 32, 33, 34) sind allerdings gegeneinander verkröpft, um sich so gegeneinander abzustützen.

Die Fig. 7, 8 und 9 zeigen hierzu verschiedene Ausbildungen, wobei die Kröpfungen (35, 38) wechselseitig von Querdraht zu Querdraht bzw. Längsdraht zu Längsdraht vorgesehen sind, was Fig. 8 zeigt oder aber jeweils auch von Oberseite zu Unterseite, was Fig. 9 verdeutlicht, so daß eine sehr intensive Abstützung der Längs- und Querdrähte auf kürzestem Wege möglich ist.

Fig. 6 schließlich zeigt eine Vorkopfansicht der Filtertasche (17) mit der Vorderkante (17''), wobei angedeutet ist, daß die den Rahmen (17') bildenden Schlitzrohre bzw. der geschlitzte Rohrrahmen in diese Vorderkante (17) eingeführt sind, wodurch eine natürliche Entspannung möglich ist und damit eine vorteilhaft über die gesamte Länge des Gitters (19) ebene Fläche, an der sich das Filtertuch (20) das hier nicht wiedergegeben ist, abstützen kann.

## Patentansprüche

1. Staubfilter für den Einsatz im untertägigen Berg- und Tunnelbau, insbesondere zum Reinigen der staubhaltigen Wetter hinter Gewinnungsmaschinen oder in den Strecken eingesetzter Teil- oder Vollschnittmaschinen, mit einem Gehäuse (1) mit in einer Ebene verlaufendem Rein- (5) und Rohgaskanal (6), die über einen auf der Vorderseite des Gehäuses ausgebildeten Kanal (16) bzw. über in seinem Boden (6') ausgebildete Lochungen (15) mit den im Gehäuseinneren (29) angeordneten Filtertaschen (17) verbunden sind, wobei für die über Führungen in das Gehäuseinnere einschiebbaren Filtertaschen (17) eine diskontinuierlich arbeitende Reinigungseinrichtung und wahlweise zu betätigende, beidseitige Inspektionsöffnungen (3, 4) vorgesehen sind, **dadurch gekennzeichnet,** daß das eine transportable Einheit darstellende Modulteil (7) mit Gehäuse (1) mit weiteren, ebenfalls Gehäuse (1', 1'') aufweisenden Modulteilen (9, 10) mittels beidseitig der Roh- und Reingaskanäle (6, 5) vorgesehenen kuppelfähigen Kopfstücken (12, 13) zu einer Kompletteinheit koppelbar ausgebildet ist, daß die Querschnitte der jedem Gehäuse (1, 1', 1'') zugeordneten Rein- (5) und Rohgaskanäle (6) durch Verschieben des Reingaskanalbodens (14) zusammen mit der Trennwand quer zur Wetterfließrichtung veränderbar sind, daß der Rahmen (17' ) der Filtertaschen (17) zur Abdichtung gegen die Gehäuseinnenwand mit einem abdichtenden Material beschichtet ist und daß die Filtertaschen (17), als Stützkonstruktion für das darüber gespannte Filtertuch (20), ein Gitter (19) aus sich aneinander abstützenden Längs- (31, 32) und Querdrähten (33, 34) oder zwei sich gegenüberliegenden Gitter (19) dieser Art mit gegeneinander gerichteten Distanzschuhen (18, 18', 18'') aufweisen.

**2.** Staubfilter nach Anspruch 1, **dadurch gekennzeichnet,** daß die Filtertaschen (17) zu mehreren hochkantstehend jeweils einem entsprechend der Abmaße von Förderwagen und/oder von Förderkörben ausgebildeten Gehäuse (1) zugeordnet sind.

**3.** Staubfilter nach Anspruch 1, **dadurch gekennzeichnet,** daß im Gehäuse (1) unterhalb der Filtertaschen (17) ein in Längsrichtung der aneinandergereihten Gehäuse (1, 1', 1'') verlaufender Kratzförderer (2) angeordnet ist.

**4.** Staubfilter nach Anspruch 1, **dadurch gekennzeichnet,** daß der Einsteckrahmen (17'') des Rahmens (17') der Filtertaschen (17) oder die Inspektionsöffnungen (3, 4) als Vorderwand des Kanals (16) mit an die Druckluftversorgung anschließbaren Druckschockdüsen bestückt sind.

**5.** Staubfilter nach Anspruch 1, Anspruch 3 und Anspruch 4, **dadurch gekennzeichnet,** daß der Kratzförderer (2) am Boden des Gehäuses (1) endseitig einen Staubaustrag (21) aufweist, der über eine Strahldüse (22) mit einem mit einer Wasserluftdüse (26) versehenen Strahlinjektor (23) verbunden ist.

**6.** Staubfilter nach Anspruch 5, **dadurch gekennzeichnet,** daß der Strahlinjektor (23) mit einer Mischstrecke (24) mit Austragszyklon (25) verbunden ist.

**7.** Staubfilter nach Anspruch 1, **dadurch gekennzeichnet,** daß der Rahmen (17') als geschlitzter Rohrrahmen ausgebildet ist, in dem die Längs- (31, 32) und Querdrähte (33, 34) des Gitters (19) sich gegeneinander abstützend verankert bzw. befestigt sind.

**8.** Staubfilter nach Anspruch 1, **dadurch gekennzeichnet,** daß die Längs- und Querdrähte (31, 32, 33, 34) längs-und/oder querversetzt gegeneinander verkröpft ausgebildet sind.

**9.** Staubfilter nach Anspruch 7, **dadurch gekennzeichnet,** daß der Rahmen (17') U-förmig gebogen und mit den Enden (36, 37) in dem Einsteckrahmen (17'') festgelegt ist, der mittig einen Schlitz (17''') zum Austritt der Wetter aus dem Filtertascheninneren (17'''') in den Kanal (16) aufweist.

**Claims**

**1.** A dust filter for use in underground mining and tunnel construction, particularly for cleansing the dust-laden air behind mining machinery or part-section or full-section machines used in the drifts, with a housing (1) with a pure gas (5) and a crude gas (6) channels, extending along a plane, which, by means of a channel (16) fitted on the front side of the housing, or by means of perforations (15) made in the bottom (6') are connected with the filter bags (17) arranged inside the housing (29), there being provided for the filter bags (17) which can be pushed along guides inside the housing, for the bottom (14) of the pure gas channel, a discontinuously operating cleansing device and selectably actuated inspection openings (3, 4) on both sides, characterized in that a module part (7) constituting a transportable unit with housing (1) is constructed so as to be able to be coupled to form a complete unit with further module parts (9, 10) also provided with housings (1', 1'') by means of connectable head pieces (12, 13) mounted on both sides of the crude and pure gas channels (6, 5), in that the cross-sections of the pure gas (5) and crude gas(6) channels associated with each housing (1, 1', 1''), are modifiable by moving the pure gas channel bottom (14) together with the partition transversely to the direction of air flow, in that the frame (17') of the filter bags (17), for sealing against the inner wall of the housing, is coated with a sealing material, and in that the filter bags (17), as a supporting construction for the filter cloth spread above them, have a grid (19) of mutually supported longitudinal (31, 32) and transversal (33, 34) wires, or two oppositely placed grids (19) of this type with distance shoes (18, 18', 18'') facing one another.

**2.** A dust filter according to claim 1, characterized in that the filter bags (17) are respectively associated with one of many upright housings (1) constructed correspondingly to the dimensions of conveyor trucks and/or conveyor baskets.

**3.** A dust filter according to claim 1, characterized in that, mounted in the housing (1) under the filter bags (17) is a scraper conveyor (2) extending in the longitudinal direction of the housings (1, 1', 1'') arranged in a row.

**4.** A dust filter according to claim 1, characterized in that the insertion frame (17'') of the frame (17') of the filter bags (17), or the inspection openings (3, 4) as front wall of the channel (16) are fitted with pressure shock nozzles connectable with the compressed air supply.

5. A dust filter according to claims 1, 3 and 4, characterized in that the scraper conveyor (2) has at the bottom of the housing (1) at the end a dust extractor (21) which is connected through a jet nozzle (22) with a jet injector (23) fitted with an air/water nozzle (26).

6. A dust filter according to claim 5, characterized in that the jet injector (23) is connected with a mixing path (24) with extraction cyclone (25).

7. A dust filter according to claim 1, characterized in that the frame (17') is designed as a slit tubular frame in which the longitudinal (31, 32) and transversal wires (33, 34) of the grid (19) are anchored or secured mutually supported.

8. A dust filter according to claim 1, characterized in that the longitudinal and tranversal wires (31, 32, 33, 34) are designed to be mutually at right angles longitudinally and/or transversely offset.

9. A dust filter according to claim 7, characterized in that the frame (17') is bent channel-shaped and is secured with the ends (36, 37) in the insertion frame (17") which has centrally a slit (17''') for the air to flow out of the inside of the filter bag (17'''') into the channel (16).

**Revendications**

1. Filtre à poussières pour l'utilisation dans l'exploitation des mines et la construction des tunnels, en particulier pour le nettoyage de l'air de mine contenant des poussières derrière des machines d'extraction ou des machines de lavage partiel ou complet utilisées dans les galeries, avec un carter (1) avec des canaux de gaz purifié (5) et de gaz brut (6) s'étendant dans un plan, qui sont reliés par l'intermédiaire d'un canal (16) formé sur la face antérieure du carter ou respectivement par l'intermédiaire de perforations (15) formées dans son fond (6') avec les poches de filtre (17) disposées dans l'intérieur (19) du carter, un dispositif de nettoyage fonctionnant de manière discontinue et des ouvertures d'inspection (3, 4) des deux côtés actionnables à volonté étant prévus pour les poches de filtre (17) pouvant être introduites dans le carter par l'intermédiaire de guidages, caractérisé en ce que la pièce modulaire (7) formant une unité transportable avec carter (1) est formée de manière à pouvoir être couplée sous forme d'une unité complète avec d'autres pièces modulaires (9, 10) présentant également un carter (1', 1") au moyen de pièces de tête (12, 13) accouplables disposées des deux côtés des canaux de gaz brut et de gaz purifié (6, 5), que les sections transversales des canaux de gaz purifié (5) et de gaz brut (6) adjoints à chaque carter (1, 1', 1") peuvent être modifiées par translation du fond (14) du canal de gaz purifié en même temps que la paroi de séparation transversalement à la direction d'écoulement de l'air de mine, que le cadre (17') des poches de filtre (17) est recouvert d'un matériau d'étanchéité pour l'étanchéité vis-à-vis de la paroi interne du carter, et que les poches de filtre (17) présentent, en tant que construction d'appui pour le tissu filtrant (20) tendu au-dessus, une grille (19) en fils longitudinaux (31, 32) et transversaux (33, 34) s'appuyant les uns aux autres ou deux grilles (19) opposées de ce type avec des patins d'écartement (18, 18', 18") dirigés les uns vers les autres.

2. Filtre à poussières selon la revendication 1, caractérisé en ce qu'un carter (1) formé en correspondance aux dimensions des wagonnets de transport et/ou des cages d'extraction est adjoint à chaque fois à plusieurs poches de filtre (17) disposées debout.

3. Filtre à poussières selon la revendication 1, caractérisé en ce qu'un transporteur à racloirs (2) s'étendant en direction longitudinale des carters (1, 1', 1") alignés les uns derrière les autres est disposé dans le carter (1) au-dessous des poches de filtre (17).

4. Filtre à poussières selon la revendication 1, caractérisé en ce que le cadre d'enfichage (17") du cadre (17') des poches de filtre (17) ou les ouvertures d'inspection (3, 4) en tant que paroi antérieure du canal (16) sont équipés de buses de pression à chocs pouvant être raccordées à l'alimentation en air comprimé.

5. Filtre à poussières selon la revendication 1, la revendication 3 et la revendication 4, caractérisé en ce que le transporteur à racloirs (2) présente sur le fond du carter (1), du côté de l'extrémité, une évacuation de poussières (21) qui est reliée par l'intermédiaire d'une buse à jet (22) à un injecteur à jet (23) muni d'une buse eau-air (26).

6. Filtre à poussières selon la revendication 5, caractérisé en ce que l'injecteur à jet (23) est relié à une section de mélange (24) avec cyclone d'extraction (25).

7. Filtre à poussières selon la revendication 1, caractérisé en ce que le cadre (17') est réalisé sous forme de cadre en tubes fendu dans lequel les fils longitudinaux (31, 32) et transversaux (33, 34) de la grille (19) sont ancrés ou respectivement fixés en s'appuyant les uns aux autres.

8. Filtre à poussières selon la revendication 1, caractérisé en ce que les fils longitudinaux et transversaux (31, 32, 33, 34) sont réalisés coudés décalés longitudinalement et/ou transversalement les uns par rapport aux autres.

9. Filtre à poussières selon la revendication 8, caractérisé en ce que le cadre (17') est courbé en forme de U et fixé par les extrémités (36, 37) dans le cadre d'enfichage (17") qui présente centralement une fente (17''') pour la sortie de l'air de mine depuis l'intérieur (17"") des poches de filtre dans le canal (16).

_Fig.1_

_Fig.2_

# Fig.3

Fig. 4

EP 0 296 278 B1

Fig. 5

Fig. 6

Fig. 7

Fig. 8

Fig. 9